(19) Europäisches Patentamt
European Patent Office
Office européen des brevets

(11) **EP 2 053 814 B1**

(12) **FASCICULE DE BREVET EUROPEEN**

(45) Date de publication et mention
de la délivrance du brevet:
**28.07.2010   Bulletin 2010/30**

(51) Int Cl.:
***H04L 25/49*** *(2006.01)*   ***H04L 1/06*** *(2006.01)*

(21) Numéro de dépôt: **08167005.1**

(22) Date de dépôt: **20.10.2008**

(54) **Procédé de codage spatio-temporel utilisant un alphabet de modulation de position partitionné**

Verfahren zur Raum-Zeit-Kodierung mittels eines gespaltenen Position-Modulation-Alphabets

Space-time coding method using a divided position modulation alphabet

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.10.2007   FR 0758561**

(43) Date de publication de la demande:
**29.04.2009   Bulletin 2009/18**

(73) Titulaire: **Commissariat à l'Énergie Atomique et aux Énergies Alternatives**
**75015 Paris (FR)**

(72) Inventeur: **Abou Rjeily, Chadi**
**Byblos (LB)**

(74) Mandataire: **Augarde, Eric et al**
**Brevalex**
**56 Boulevard de l'Embouchure,**
**Bât. B**
**B.P. 27519**
**31075 Toulouse Cedex 2 (FR)**

(56) Documents cités:
**FR-A- 2 899 042     FR-A- 2 899 745**

• **CHADI ABOU-RJEILY ET AL: "A Rate-1 2 x 2 Space-Time Code without any Constellation Extension for TH-UWB Communication Systems with PPM" VEHICULAR TECHNOLOGY CONFERENCE, 2007. VTC2007-SPRING. IEEE 65TH, IEEE, PI, avril 2007 (2007-04), pages 1683-1687, XP031092916 ISBN: 978-1-4244-0266-3**

**Description**

**DOMAINE TECHNIQUE**

La présente invention concerne à la fois le domaine des télécommunications en ultra-large bande ou UWB (*Ultra Wide Band*) et celui des systèmes multi-antenne à codage spatio-temporel ou STC (*Space Time Coding*) .

**ÉTAT DE LA TECHNIQUE ANTÉRIEURE**

Les systèmes de type multi-antenne sont bien connus de l'état de la technique. Ces systèmes utilisent une pluralité d'antennes à l'émission et/ou à la réception et sont dénommés, selon le type de configuration adoptée, MIMO (*Multiple Input Multiple Output*), MISO (*Multiple Input Single Output*) ou SIMO (*Single Input Multiple Output*). Par la suite nous emploierons le même terme MIMO pour couvrir les variantes MIMO et MISO précitées. L'exploitation de la diversité spatiale à l'émission et/ou à la réception permet à ces systèmes d'offrir des capacités de canal nettement supérieures à celles des systèmes mono-antenne classiques (ou SISO pour Single Input Single Output). Cette diversité spatiale est généralement complétée par une diversité temporelle au moyen d'un codage spatio-temporel (STC). Dans un tel codage, un symbole d'information à transmettre se trouve codé sur plusieurs antennes et plusieurs instants de transmission.

On connaît deux grandes catégories de systèmes MIMO à codage spatio-temporel : les systèmes à codage en treillis ou STTC (*Space Time Trellis Coding*) et les systèmes à codage par blocs ou STBC (*Space Time Block Coding*). Dans un système à codage par blocs, un bloc de symboles d'information à transmettre est codé en une matrice de symboles de transmission, une dimension de la matrice correspondant au nombre d'antennes et l'autre correspondant aux instants consécutifs de transmission.

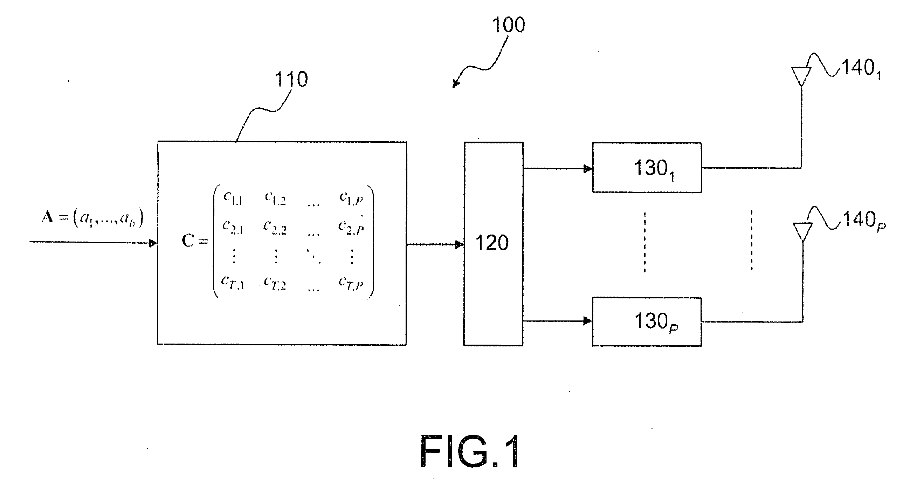

La Fig. 1 représente schématiquement un système de transmission MIMO 100 avec codage STBC. Un bloc de symboles d'information $\mathbf{S}=(\sigma_1,...,\sigma_b)$, par exemple un mot binaire de $b$ bits ou plus généralement de $b$ symboles $M$-aires, est codé en une matrice spatio-temporelle :

$$\mathbf{C} = \begin{pmatrix} c_{1,1} & c_{1,2} & ... & c_{1,P} \\ c_{2,1} & c_{2,2} & ... & c_{2,P} \\ \vdots & \vdots & \ddots & \vdots \\ c_{T,1} & c_{T,2} & ... & c_{T,P} \end{pmatrix} \qquad (1)$$

La fonction $f$ qui, à tout vecteur $\mathbf{S}$ de symboles d'information, fait correspondre le mot de code spatio-temporel $\mathbf{C}$, est appelée fonction de codage. Si la fonction $f$ est linéaire on dit que le code spatio-temporel est linéaire. Si les coefficients $c_{t,p}$ sont réels, le code spatio-temporel est dit réel.

Sur la Fig. 1, on a désigné par 110 un codeur spatio-temporel. A chaque instant d'utilisation de canal $t$, le codeur fournit au multiplexeur 120 le $t$-*ème* vecteur-ligne de la matrice $\mathbf{C}$. Le multiplexeur transmet aux modulateurs $130_1,...,130_P$ les coefficients du vecteur ligne et les signaux modulés sont transmis par les antennes $140_1,...,140_P$.

Le code spatio-temporel est caractérisé par son débit, c'est-à-dire par le nombre de symboles d'information qu'il transmet par instant d'utilisation de canal (PCU). Le code est dit à plein débit s'il est $P$ fois plus élevé que le débit relatif à une utilisation mono-antenne (SISO).

Le code spatio-temporel est caractérisé en outre par sa diversité qui-peut être définie comme le rang de la matrice $\mathbf{C}$. On aura une diversité maximale si pour deux mots de code $\mathbf{C_1}$ et $\mathbf{C_2}$ quelconques correspondant à deux vecteurs $\mathbf{S_1}$ et $\mathbf{S_2}$, la matrice $\mathbf{C_1}$-$\mathbf{C_2}$ est de rang plein.

Le code spatio-temporel est enfin caractérisé par son gain de codage qui traduit la distance minimale entre différents mots du code. On peut le définir comme :

$$\min_{\mathbf{C_1} \neq \mathbf{C_2}} \det\left((\mathbf{C_1} - \mathbf{C_2})^H (\mathbf{C_1} - \mathbf{C_2})\right) \qquad (2)$$

ou, de manière équivalente, pour un code linéaire :

$$\min_{\mathbf{C}\neq 0} \det\left(\mathbf{C}^{\mathbf{H}}\mathbf{C}\right) \qquad (3)$$

où det(**C**) signifie le déterminant de **C** et $C^H$ est la matrice conjuguée transposée de **C**. Pour une énergie de transmission par symbole d'information, le gain de codage est borné.

Un code spatio-temporel sera d'autant plus résistant à l'évanouissement que son gain de codage sera élevé.

Un premier exemple de codage spatio-temporel pour un système MIMO à deux antennes de transmission a été proposé dans l'article de S.M. Alamouti intitulé « A transmit diversity technique for wireless communications », publié dans IEEE Journal on selected areas in communications, vol. 16, pp. 1451-1458, Oct. 1998. Le code d'Alamouti est défini par la matrice spatiotemporelle 2x2:

$$\mathbf{C} = \begin{pmatrix} \sigma_1 & \sigma_2 \\ -\sigma_2^{*} & \sigma_1^{*} \end{pmatrix} \qquad (4)$$

transmettre et $\sigma_1^{*}$ et $\sigma_2^{*}$ leurs conjugués respectifs. Comme on peut le voir dans l'expression (4), ce code transmet deux symboles d'information pour deux utilisations de canal et son débit est donc d'un symbole/PCU.

Bien qu'initialement présenté dans l'article précité pour des symboles appartenant à une modulation QAM, le code d'Alamouti s'applique également à des symboles d'information appartenant à une modulation PAM ou PSK. En revanche il ne peut aisément s'étendre à une modulation de position, dite aussi PPM (*Pulse Position Modulation*). Le symbole d'un alphabet de modulation PPM à $M$ positions peut être représenté par un vecteur de $M$ composantes toutes nulles sauf une égale à 1, correspondant à la position de modulation à laquelle une impulsion est émise. L'utilisation de symboles PPM dans l'expression (4) conduit alors à une matrice spatiotemporelle de taille $2M\times2$. Le terme $-\sigma_2^{*}$ figurant dans la matrice n'est pas un symbole PPM et nécessite la transmission d'une impulsion affectée d'un changement de signe. Autrement dit, cela revient à utiliser des symboles PPM signés, appartenant à une extension de l'alphabet de modulation PPM.

Un second exemple de code spatio-temporel a été proposé dans l'article de C. Abou-Rjeily et al. intitulé « A space-time coded MIMO TH-UWB transceiver with binary pulse position modulation » publié dans IEEE Communications Letters, Vol. 11, No. 6, Juin 2007, pages 522-524. Ce code s'applique à des systèmes multi-antenne possédant un nombre d'antennes de transmission égal à une puissance de 2, c'est-à-dire $P = 2^p$ et à des symboles d'information appartenant à un alphabet de modulation de position binaire ou BPPM (*Binary Pulse Position Modulation*). Plus précisément, la matrice du code spatio-temporel proposé s'écrit sous la forme :

$$\mathbf{C} = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix} \qquad (5)$$

où les symboles d'informations BPPM $\sigma_1, \sigma_2...,\sigma_P$ sont représentés sous la forme de vecteurs $(1\ 0)^T$ ou $(0\ 1)^T$, le premier vecteur correspondant à la première position PPM et le second vecteur à la seconde position PPM, et où $\Omega$ est la matrice de permutation de taille $2\times2$. Ce code spatio-temporel présente l'avantage de ne pas utiliser de symboles complexes ou signés et d'avoir une diversité maximale. En revanche ce code ne permet de transmettre qu'un symbole BPPM par utilisation de canal (donc 1 bit/ CPU) soit le même que celui d'un système mono-antenne classique.

Un troisième exemple de code spatio-temporel a été proposé dans l'article de C. Abou-Rjeily *et al.* intitulé « A rate-1 2×2 space-time code without any constellation extension for TH-UWB communications system with PPM » publié dans Proceedings of the 2007 VTC Conference, pages 1683-1687, avril 2007. Ce code s'applique à des systèmes à $P$ = 2 antennes de transmission et à des symboles d'information appartenant à un alphabet de modulation $M$-PPM. Plus précisément, la matrice du code spatio-temporel proposé s'écrit sous la forme :

$$\mathbf{C} = \begin{pmatrix} \sigma_1 & \sigma_2 \\ \Omega\sigma_2 & \sigma_1 \end{pmatrix} \qquad (6)$$

où les symboles d'information $M$-PPM $\sigma_1, \sigma_2, ..., \sigma_P$ peuvent être représentés sous forme de vecteurs de dimension $M$ dont $M$-1 composantes sont nulles et la composante restante, égale à 1, indique la position de modulation du symbole PPM, et où $\Omega$ est la matrice de permutation de taille $M \times M$.

Comme dans le second exemple, ce code spatio-temporel présente l'avantage de ne pas utiliser de symboles complexes ou signés. Il présente également une diversité maximale pour toutes les valeurs de $M \geq 2$. En revanche, là encore, le code ne permet de transmettre qu'un symbole $M$-PPM par utilisation de canal (donc un débit binaire de $\log_2$ ($M$)/PCU) soit le même débit que pour un système mono-antenne classique.

Des systèmes MIMO à codage spatio-temporel utilisant des signaux de transmission UWB (*Ultra Wide* Band) ont été proposés dans la littérature. On entend par signal UWB un signal conforme au masque spectral stipulé dans la réglementation du FCC du 14 Février 2002, révisée en Mars 2005, c'est-à-dire, pour l'essentiel, un signal dans la bande spectrale 3.1 à 10.6 GHz présentant une largeur de bande d'au moins 500MHz à -10dB.

Les signaux UWB se divisent en deux catégories : les signaux multi-bande OFDM (MB-OFDM) et les signaux UWB de type impulsionnel. Seuls ces derniers seront considérés dans la suite de la demande.

Un signal UWB impulsionnel est constitué d'impulsions très courtes, typiquement de l'ordre de quelques centaines de picosecondes, réparties au sein d'une trame. Afin de réduire l'interférence multi-accès (MAI pour *Multiple Access Interference*), un code de sauts temporels (TH pour *Time Hopping*) distinct est affecté à chaque utilisateur. Le signal TH-UWB issu ou à destination d'un utilisateur $k$ peut alors s'écrire sous la forme:

$$s_k(t) = \sum_{n=0}^{N_s-1} w(t - nT_s - c_k(n)T_c) \qquad (7)$$

où w est la forme de l'impulsion élémentaire, $T_c$ est une durée bribe (ou chip), $T_s$ est la durée d'un intervalle élémentaire avec $N_s = N_c T_c$ où $N_c$ est le nombre de chips dans un intervalle, la trame totale étant de durée $T_f = N_s T_s$ où $N_s$ est le nombre d'intervalles dans la trame. La durée de l'impulsion élémentaire est choisie inférieure à la durée chip, soit $T_w \leq T_c$. La séquence $c_k(n)$ pour $n=0,..,N_s$-1 définit le code de saut temporel de l'utilisateur k. Les séquences de sauts temporels sont choisies de manière à minimiser le nombre de collisions entre impulsions appartenant à des séquences de saut temporel d'utilisateurs différents.

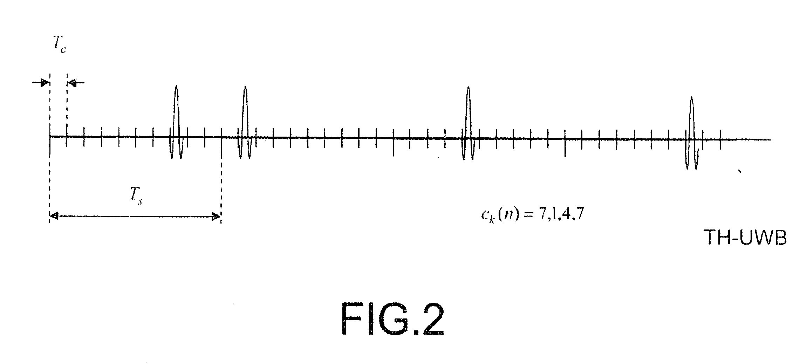

On a représenté en Fig. 2 un signal TH-UWB associé à un utilisateur $k$. On remarquera que la séquence $c_k$ (n), $n=0,..,N_s$-1, relative à l'utilisateur en question est ici $c_k(n)$=7,1,4,7.

Dans un système MIMO à codage spatio-temporel utilisant des signaux UWB, aussi dénommés MIMO-UWB, chaque antenne transmet un signal UWB modulé en fonction d'un symbole d'information ou d'un bloc de tels symboles. Par exemple, pour une antenne $p$ donnée, si les symboles d'information sont de type QAM ou BPSK, le signal $s^p(t)$ transmis par cette antenne pourra s'exprimer, en conservant les mêmes notations que précédemment mais en faisant abstraction de l'indice relatif à l'utilisateur :

$$s^p(t) = \sum_{n=0}^{N_s-1} \sigma_p w(t - nT_s - c(n)T_c) \qquad (8)$$

où $\sigma_p$ est le symbole d'information QAM ou BPSK transmis.

Etant donné la très grande largeur de bande des signaux UWB, il est très délicat de récupérer une information de phase au niveau du récepteur et donc de détecter un symbole d'information $\sigma_p$. En outre, certains systèmes UWB ne se prêtent pas ou guère à la transmission d'impulsions signées. Par exemple, les systèmes UWB optiques ne transmettent que des signaux d'intensité lumineuse TH-UWB, nécessairement dépourvus d'information de signe.

Les codes spatio-temporels utilisant des symboles PPM permettent de ne pas avoir à recourir à des impulsions complexes ou signées. En effet, si $\sigma_p$ est un symbole $M$-PPM transmis par l'antenne $p$, le signal transmis par cette antenne peut s'exprimer sous la forme:

$$s^p(t) = \sum_{n=0}^{N_s-1} w(t - nT_s - c(n)T_c - \mu_p\varepsilon) \qquad (9)$$

où $\varepsilon$ est un retard de modulation (*dither*) sensiblement inférieur à la durée chip et $\mu_p \in \{0,..,M-1\}$ est la position $M$-aire PPM du symbole, la première position étant considérée ici comme introduisant un retard nul.

Par exemple les second et troisième exemples de code spatio-temporel précités sont bien adaptés à des systèmes MIMO UWB. Toutefois, comme précédemment indiqué, ces codes ne permettent pas d'obtenir un débit supérieur à celui d'un système mono-antenne classique.

Le but de la présente invention est de proposer un procédé de codage spatio-temporel pour un système UWB-MIMO qui, bien que n'utilisant pas des symboles d'information complexes ou signés, permet d'atteindre des débits supérieurs à celui d'un système mono-antenne.

## EXPOSÉ DE L'INVENTION

Selon un premier mode de réalisation, la présente invention est définie par un procédé de codage spatio-temporel pour système de transmission UWB comprenant deux éléments radiatifs, ledit procédé codant un bloc de symboles d'information $\mathbf{S}=(\sigma_1,\sigma_2,\sigma_3,\sigma_4)$ appartenant à un alphabet de modulation PPM présentant un nombre $M$ pair de positions de modulation, ledit alphabet étant partitionné en un premier et un second sous-alphabets correspondant à des plages successives de positions de modulation, les symboles $\sigma_1,\sigma_3$ appartenant au premier sous-alphabet et les symboles $\sigma_2,\sigma_4$ appartenant au second sous-alphabet, le procédé codant ledit bloc de symboles en une séquence de vecteurs, chaque vecteur étant associé à une utilisation du canal de transmission et un élément radiatif donné, les composantes d'un vecteur étant destinées à moduler en position un signal UWB impulsionnel, chaque composante correspondant à une position de modulation PPM, lesdits vecteurs étant obtenus à partir des éléments de la matrice :

$$\mathbf{C} = \begin{pmatrix} \sigma_1 + \sigma_2 & \sigma_3 + \sigma_4 \\ \Delta(\sigma_3 + \Omega\sigma_4) & \sigma_1 + \Omega\sigma_2 \end{pmatrix}$$

une ligne de la matrice correspondant à une utilisation du canal de transmission et une colonne de la matrice correspondant à un élément radiatif, la matrice $\mathbf{C}$ étant définie à une permutation près de ses lignes et/ou ses colonnes, $\Delta$ étant une permutation des positions PPM dudit alphabet et $\Omega$ étant une permutation des positions de modulation PPM dudit second sous-alphabet.

La matrice $\Omega$ est avantageusement une permutation circulaire, par exemple, un décalage circulaire des positions de modulation PPM dudit second alphabet.

Selon un second mode de réalisation, l'invention est définie par un procédé de codage spatio-temporel pour système de transmission UWB comprenant trois éléments radiatifs, ledit procédé codant un bloc de symboles d'information $\mathbf{S}=(\sigma_1,\sigma_2,\sigma_3,\sigma_4,\sigma_5,\sigma_6,\sigma_7,\sigma_8,\sigma_9)$ appartenant à un alphabet de modulation PPM présentant un nombre $M$ de positions de modulation multiple de 3, ledit alphabet étant partitionné en un premier, un second et un troisième sous-alphabets correspondant à des plages successives de positions de modulation, les symboles $\sigma_1,\sigma_4,\sigma_7$ appartenant au premier sous-alphabet, les symboles $\sigma_2,\sigma_5,\sigma_8$ appartenant au second sous-alphabet et les symboles $\sigma_3,\sigma_6,\sigma_9$ au troisième sous-alphabet, le procédé codant ledit bloc de symboles en une séquence de vecteurs, chaque vecteur étant associé à une utilisation du canal de transmission et un élément radiatif donné, les composantes d'un vecteur étant destinées à moduler en position un signal UWB impulsionnel, chaque composante correspondant à une position de modulation PPM, lesdits vecteurs étant obtenus à partir des éléments de la matrice :

$$C = \begin{pmatrix} \sigma_1 + \sigma_2 + \sigma_3 & \sigma_4 + \sigma_5 + \sigma_6 & \sigma_7 + \sigma_8 + \sigma_9 \\ \Delta\left(\sigma_7 + \Omega^{(1)}\sigma_8 + \sigma_9\right) & \sigma_1 + \Omega^{(1)}\sigma_2 + \sigma_3 & \sigma_4 + \Omega^{(1)}\sigma_5 + \sigma_6 \\ \Delta\left(\sigma_4 + \sigma_5 + \Omega^{(2)}\sigma_6\right) & \Delta\left(\sigma_7 + \sigma_8 + \Omega^{(2)}\sigma_9\right) & \sigma_1 + \sigma_2 + \Omega^{(2)}\sigma_3 \end{pmatrix}$$

une ligne de la matrice correspondant à une utilisation du canal de transmission et une colonne de la matrice correspondant à un élément radiatif, la matrice **C** étant définie à une permutation près de ses lignes et/ou ses colonnes, $\Delta$ étant une permutation des positions PPM dudit alphabet, $\Omega^{(1)}$ étant une permutation des positions de modulation PPM dudit second sous-alphabet et $\Omega^{(2)}$ étant une permutation des positions de modulation PPM dudit troisième sous-alphabet.

Les matrices $\Omega^{(1)}$ et/ou $\Omega^{(2)}$ est une/sont des permutation(s) circulaire(s), par exemple, une/des décalage(s) circulaire(s) des positions de modulation PPM, respectivement desdits second et troisième sous-alphabets.

Selon un troisième mode de réalisation, l'invention est définie par un procédé de codage spatio-temporel pour un système de transmission UWB comprenant une pluralité $P$ d'éléments radiatifs, ledit procédé codant un bloc de symboles d'information $\mathbf{S}=(\sigma_1,\sigma_2,...\sigma_{P2})$ appartenant à un alphabet de modulation PPM présentant un nombre $M$ de positions de modulation multiple de $P$, ledit alphabet étant partitionné en $P$ sous-alphabets correspondant à des plages successives de positions de modulation, les symboles $\sigma_{qP+1}$, $q=0,...,P$-1 appartenant au premier sous-alphabet, les symboles $\sigma_{qP+2}$, $q = 0,...,P$-1 appartenant au second sous-alphabet, et ainsi de suite, les symboles $\sigma_{qP+P}$, $q=0,...,P$-1 au $P$ ième sous-alphabet, le procédé codant ledit bloc de symboles en une séquence de vecteurs, chaque vecteur étant associé à une utilisation du canal de transmission et un élément radiatif donné, les composantes d'un vecteur étant destinées à moduler en position un signal UWB impulsionnel, chaque composante correspondant à une position de modulation PPM, lesdits vecteurs étant obtenus à partir des éléments de la matrice donnée en annexe, une ligne de la matrice correspondant à une utilisation du canal de transmission et une colonne de la matrice correspondant à un élément radiatif, la matrice **C** étant définie à une permutation près de ses lignes et/ou ses colonnes, $\Delta$ étant une permutation des positions PPM dudit alphabet, les matrices $\Omega^{(p)}$, $p=1,...,P$-1 étant une permutation des positions de modulation PPM du $(p+1)$ième sous-alphabet.

Au moins une matrice $\Omega^{(p)}$, $p=1,...,P$-1 peut être une permutation circulaire par exemple un décalage circulaire des positions de modulation PPM du $(p+1)$ième sous-alphabet.

De manière similaire la matrice $\Delta$ peut être une permutation circulaire, par exemple un décalage circulaire dudit alphabet.

Selon une première variante, les éléments radiatifs sont des antennes UWB.

Selon une seconde variante, les éléments radiatifs sont des diodes laser ou des diodes électroluminescentes.

Avantageusement, ledit signal impulsionnel peut être un signal TH-UWB.

**BRÈVE DESCRIPTION DES DESSINS**

D'autres caractéristiques et avantages de l'invention apparaîtront à la lecture d'un mode de réalisation préférentiel de l'invention fait en référence aux figures jointes parmi lesquelles :

la Fig. 1 représente schématiquement un système de transmission MIMO avec codage STBC connu de l'état de la technique ;
les Fig. 2 représente la forme d'un signal TH-UWB ;
la Fig. 3 représente schématiquement un système de transmission UWB multi-antenne selon un premier mode de réalisation de l'invention ;
la Fig. 4 représente schématiquement un système de transmission UWB multi-antenne selon un second mode de réalisation de l'invention.

**EXPOSÉ DÉTAILLÉ DE MODES DE RÉALISATION PARTICULIERS**

L'idée de base de la présente invention est de partitionner un alphabet de modulation PPM en plages distinctes et de créer une extension de l'alphabet de modulation PPM à partir de l'alphabet ainsi partitionné, le code spatio-temporel étant généré à partir d'un bloc de symboles appartenant à l'alphabet ainsi étendu. Comme nous le verrons plus loin l'extension de l'alphabet permet d'accroître le débit du code.

Selon un premier mode de réalisation, on considère tout d'abord un système de transmission UWB à P=2 antennes de transmission ou, plus généralement, à $P$=2 éléments radiatifs.

On suppose également que l'on dispose d'un alphabet de modulation $M$-PPM, noté $A$, possédant un nombre $M$ pair de positions de modulation. Ces positions peuvent être rangées selon un ordre temporel donné, par exemple $\{1,..,M\}$, où 1 correspond au décalage temporel minimal et $M$ au décalage temporel maximal. Dans la suite, une position de modulation sera indifféremment représentée par un indice $m \in \{1,..,M\}$ ou par un vecteur $\sigma$ de taille $M$ et de composantes toutes nulles à l'exception de la $m$ ième composante, égale à 1, définissant la position en question.

L'alphabet $A$ est partitionné en deux plages consécutives disjointes, ou sous-alphabets, soit

$$A_1 = \left\{ 1,..,\frac{M}{2} \right\} \text{ et } A_2 = \left\{ \frac{M}{2}+1, M \right\}.$$ Nous considérerons des blocs de symboles d'information $\mathbf{S}= (\sigma_1, \sigma_2,$

$\sigma_3, \sigma_4)$ où $\sigma_1, \sigma_2, \sigma_3, \sigma_4$ sont des symboles de $\tilde{A}$ tels que $\sigma_1, \sigma_3 \in A_1$ et $\sigma_2, \sigma_4 \in A_2$. L'alphabet $\tilde{A}$ composé des quadruplets $\sigma_1, \sigma_2, \sigma_3, \sigma_4$ vérifiant la condition précédente, c'est-à-dire :

$$\tilde{A} = \left\{ (\boldsymbol{\sigma_1}, \boldsymbol{\sigma_2}, \boldsymbol{\sigma_3}, \boldsymbol{\sigma_4}) \big| \boldsymbol{\sigma_1}, \boldsymbol{\sigma_3} \in A_1 \text{ et } \boldsymbol{\sigma_2}, \boldsymbol{\sigma_4} \in A_2 \right\} \tag{10}$$

$$Card\left( \tilde{A} \right) = \left( \frac{M}{2} \right)^4, \text{ puisque } Card\left( A_1 \right) = Card\left( A_2 \right) = \frac{M}{2}..$$

Par exemple pour un alphabet 8-PPM, l'alphabet $\tilde{A}$ sera composé des quadruplets $\sigma_1, \sigma_2, \sigma_3, \sigma_4$, tels que :

$$\boldsymbol{\sigma_1}, \boldsymbol{\sigma_3} \in \left\{ \begin{pmatrix} 1 \\ 0 \\ 0 \\ 0 \\ 0 \\ 0 \\ 0 \\ 0 \end{pmatrix}, \begin{pmatrix} 0 \\ 1 \\ 0 \\ 0 \\ 0 \\ 0 \\ 0 \\ 0 \end{pmatrix}, \begin{pmatrix} 0 \\ 0 \\ 1 \\ 0 \\ 0 \\ 0 \\ 0 \\ 0 \end{pmatrix}, \begin{pmatrix} 0 \\ 0 \\ 0 \\ 1 \\ 0 \\ 0 \\ 0 \\ 0 \end{pmatrix} \right\} \text{ et } \boldsymbol{\sigma_2}, \boldsymbol{\sigma_4} \in \left\{ \begin{pmatrix} 0 \\ 0 \\ 0 \\ 0 \\ 1 \\ 0 \\ 0 \\ 0 \end{pmatrix}, \begin{pmatrix} 0 \\ 0 \\ 0 \\ 0 \\ 0 \\ 1 \\ 0 \\ 0 \end{pmatrix}, \begin{pmatrix} 0 \\ 0 \\ 0 \\ 0 \\ 0 \\ 0 \\ 1 \\ 0 \end{pmatrix}, \begin{pmatrix} 0 \\ 0 \\ 0 \\ 0 \\ 0 \\ 0 \\ 0 \\ 1 \end{pmatrix} \right\}$$

Dans le cas général d'un alphabet $M$ - PPM, avec $M$ pair, le code spatio-temporel utilisé par le système MIMO-UWB à deux antennes est défini par la matrice suivante, de dimension $2M \times 2$:

$$\mathbf{C} = \begin{pmatrix} \boldsymbol{\sigma_1} + \boldsymbol{\sigma_2} & \boldsymbol{\sigma_3} + \boldsymbol{\sigma_4} \\ \Delta \left( \boldsymbol{\sigma_3} + \Omega \boldsymbol{\sigma_4} \right) & \boldsymbol{\sigma_1} + \Omega \boldsymbol{\sigma_2} \end{pmatrix} \tag{11}$$

où $\sigma_1, \sigma_2, \sigma_3, \sigma_4$ sont les symboles d'information à transmettre, représentés sous forme de vecteurs colonne de dimension $M$;

$\Omega$ est une matrice de taille $M \times M$ définie par :

$$\Omega = \begin{pmatrix} \mathbf{I}_{\mathbf{M'}} & \mathbf{0}_{\mathbf{M'}} \\ \mathbf{0}_{\mathbf{M'}} & \mathbf{\Omega'} \end{pmatrix} \qquad (12)$$

$M' = \dfrac{M}{2}$ , où $\mathbf{I}_{\mathbf{M'}}$ et $\mathbf{0}_{\mathbf{M'}}$ sont respectivement la matrice identité et la matrice nulle de dimension $M' \times M'$ et $\Omega'$ est une matrice de permutation de taille $M' \times M'$. On notera que la matrice $\Omega$ ne permute que les positions de modulation de l'alphabet $A_2$;

$\Delta$ est une matrice de permutation de taille $M \times M$ opérant sur les positions de modulation de l'alphabet $A$.

On appelle permutation sur un ensemble de positions de modulation toute bijection de cet ensemble sur lui-même, à l'exception de l'identité. La matrice de permutation $\Omega'$ peut être notamment une matrice de permutation circulaire sur les $M'$ dernières positions, par exemple un simple décalage circulaire :

$$\mathbf{\Omega'} = \begin{pmatrix} \mathbf{0}_{1 \times M'-1} & 1 \\ \mathbf{I}_{M'-1 \times M'-1} & \mathbf{0}_{M'-1 \times 1} \end{pmatrix} = \begin{pmatrix} 0 & 0 & \cdots & 0 & 1 \\ 1 & 0 & \cdots & 0 & 0 \\ 0 & 1 & 0 & \ddots & \vdots \\ \vdots & \ddots & \ddots & \ddots & 0 \\ 0 & \cdots & 0 & 1 & 0 \end{pmatrix} \qquad (13)$$

De manière similaire, la matrice $\Delta$ peut être une permutation circulaire sur les $M$ positions de modulation de l'alphabet $A$, par exemple un simple décalage circulaire :

$$\mathbf{\Delta} = \begin{pmatrix} \mathbf{0}_{1 \times M-1} & 1 \\ \mathbf{I}_{M-1 \times M-1} & \mathbf{0}_{M-1 \times 1} \end{pmatrix} = \begin{pmatrix} 0 & 0 & \cdots & 0 & 1 \\ 1 & 0 & \cdots & 0 & 0 \\ 0 & 1 & 0 & \ddots & \vdots \\ \vdots & \ddots & \ddots & \ddots & 0 \\ 0 & \cdots & 0 & 1 & 0 \end{pmatrix} \qquad (14)$$

où $\mathbf{I}_{M-1 \times M-1}$ est la matrice identité de taille $M$-1, $0_{1 \times M-1}$ est le vecteur ligne nul de taille $M$-1, $0_{M-1 \times 1}$ le vecteur colonne nul de taille $M$-1.

Il est important de noter que le code spatio-temporel est défini à une permutation près des lignes et des colonnes de $\mathbf{C}$. En effet, une permutation sur les lignes - on entend ici par ligne, une ligne de vecteurs dans l'expression (11) - et/ou les colonnes de $\mathbf{C}$ est encore un code spatio-temporel selon l'invention, une permutation sur les lignes équivalant à une permutation des instants d'utilisation du canal et une permutation sur les colonnes équivalant à une permutation des antennes de transmission.

Comme on peut le constater à partir de (11), les composantes de la matrice $\mathbf{C}$ sont simplement des 0 et des 1 et non des valeurs signées. Ces composantes n'introduisent par conséquent pas d'inversion de phase ni, de manière générale, de déphasage. Ce code spatio-temporel se prête bien à la modulation d'un signal ultra-large bande.

En outre, la matrice $\mathbf{C}$ possède le même nombre de « 1 » dans chacune de ses colonnes (quatre valeurs « 1 », soit deux valeurs « 1 » par PCU), ce qui se traduit par une équirépartition avantageuse de l'énergie sur les différentes antennes.

On peut expliciter la matrice du code spatio-temporel dans le cas où les matrices $\Omega'$ et $\Delta$ sont celles données respectivement par les expressions (13) et (14) :

$$C = \begin{pmatrix} \sigma_{1,1} & \sigma_{3,1} \\ \sigma_{1,2} & \sigma_{3,2} \\ \vdots & \vdots \\ \sigma_{1,M'} & \sigma_{3,M'} \\ \sigma_{2,M'+1} & \sigma_{4,M'+1} \\ \sigma_{2,M'+2} & \sigma_{4,M'+2} \\ \vdots & \vdots \\ \sigma_{2,M} & \sigma_{4,M} \\ \sigma_{4,M-1} & \sigma_{1,1} \\ \sigma_{3,1} & \sigma_{1,2} \\ \vdots & \vdots \\ \sigma_{3,M'} & \sigma_{1,M'} \\ \sigma_{4,M} & \sigma_{2,M} \\ \sigma_{4,1} & \sigma_{2,1} \\ \vdots & \vdots \\ \sigma_{4,M-2} & \sigma_{2,M-1} \end{pmatrix} \qquad (15)$$

où $\sigma_i = (\sigma_{i1}, \sigma_{i2}, ..., \sigma_{iM})^T$ pour $i = 1, ..., 4$. L'expression (15) est obtenue en tenant compte du fait que les $M$ dernières composantes de $\sigma_1, \sigma_3$ et les $M$ premières composantes de $\sigma_2, \sigma_4$ sont nulles.

On notera que le débit binaire du code spatio-temporel défini par l'expression (11) est de :

$$R = \frac{\log_2\left(\left(\frac{M}{2}\right)^4\right)}{2} = 2\log_2\left(\frac{M}{2}\right) \qquad (16)$$

Par exemple, pour une modulation 8-PPM, le débit sera de 4bits/CPU alors que celui d'un système mono-antenne classique est de 3bits/CPU. Le gain en débit sera d'autant plus prononcé que l'ordre de la modulation PPM est plus élevé.

En outre, on peut montrer que le code spatio-temporel est à diversité maximale. On rappelle qu'un code est à diversité maximale si pour tout couple de matrices distinctes **C,C'** du code, $\Delta$**C=C-C'** est de rang plein. En effet, si la matrice $\Delta$**C** n'était pas de rang plein cela signifierait que ses deux vecteurs colonne de :

$$\Delta C = \begin{pmatrix} \delta\sigma_1 + \delta\sigma_2 & \delta\sigma_3 + \delta\sigma_4 \\ \Delta(\delta\sigma_3 + \Omega\delta\sigma_4) & \delta\sigma_1 + \Omega\delta\sigma_2 \end{pmatrix} \qquad (17)$$

avec $\delta\sigma_i = \sigma_i - \sigma'_i$, seraient colinéaires. Il est facile de voir d'après la première ligne $\Delta$**C** que cela implique que $\delta\sigma_1 = \delta\sigma_3$ et $\delta\sigma_2 = \delta\sigma_4$ et, d'après la seconde ligne que $\delta\sigma_1 = \delta\sigma_3 = \delta\sigma_2 = \delta\sigma_4 = \mathbf{0}$, autrement dit $\Delta$**C=0**.

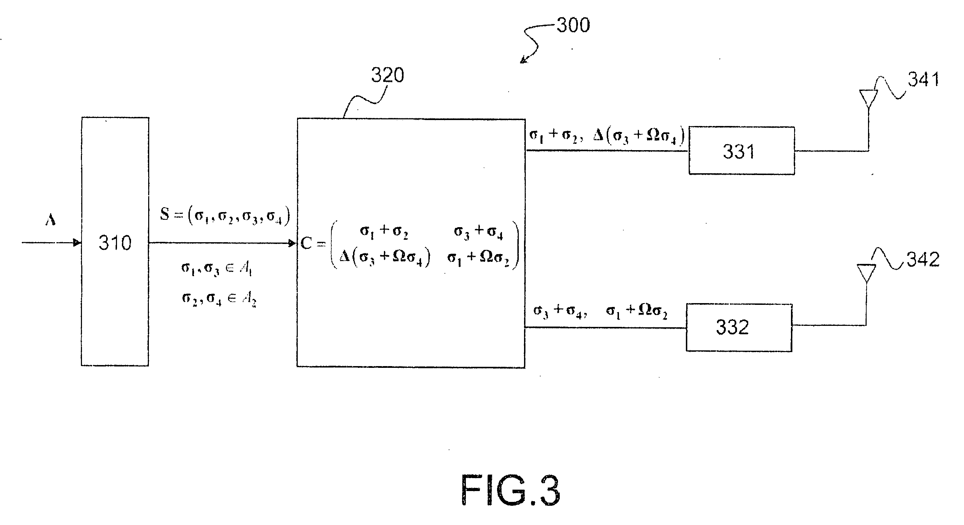

On a représenté en Fig. 3 un exemple système de transmission UWB à deux éléments radiatifs selon un premier mode de réalisation de l'invention. Les éléments radiatifs peuvent être des antennes UWB, des diodes laser ou des LEDs infrarouge. Le système 300 comprend un codeur spatio-temporel 320, deux modulateurs UWB désignés par 331 et 332 et deux antennes UWB, 341 et 342. Le codeur 320 reçoit des blocs de symboles d'information $\mathbf{S}=(\sigma_1, \sigma_2, \sigma_3, \sigma_4)$ appartenant à l'alphabet $\tilde{A}$ et calcule les éléments de la matrice $\mathbf{C}$ obéissant à l'expression (11) ou à une variante obtenue par permutation de ses lignes et/ou ses colonnes comme indiqué précédemment. Dans le cas d'un code spatio-temporel défini par (11), le codeur 320 transmet respectivement aux modulateurs 331 et 332 les vecteurs $\sigma_1+\sigma_2$ et $\sigma_3+\sigma_4$ pendant la première utilisation du canal, et les vecteurs $\Delta(\sigma_3 + \Omega\sigma_4)$ et $\sigma_1+\Omega\sigma_2$ pendant la seconde utilisation du canal.

Le modulateur UWB 331 génère, à partir des vecteurs colonnes $\sigma_1+\sigma_2$ et $\Delta(\sigma_3+\Omega\sigma_4)$, les signaux UWB impulsionnels modulés correspondants et les transmet à l'élément radiatif 341 pendant la première et la seconde utilisations du canal, respectivement. De même, le modulateur UWB 332 génère, à partir des vecteurs $\sigma_3+\sigma_4$ et $\sigma_1+\Omega\sigma_2$ les signaux UWB impulsionnels modulés correspondants et les transmet à l'élément radiatif 342 pendant les première et seconde utilisations du canal, respectivement.

Le système 300 peut comprendre en outre un transcodeur 310 adapté à recevoir des symboles d'information, par exemple des symboles binaires $\mathbf{A} = (a_1, a_2, .... a_b)$ et à les coder sous forme de blocs $\mathbf{S}\in \tilde{A}$. Le transcodeur peut en outre comprendre des moyens de codage source et/ou de codage canal préalablement à l'opération de transcodage proprement dite, de manière connue en soi.

A titre d'exemple, nous pouvons expliciter les signaux transmis par les antennes 341 et 342 pendant les deux instants de transmission, lorsque le code spatio-temporel est défini par l'expression (15). On suppose en outre que les modulateurs 331, 332 effectuent une modulation de type TH-UWB.

Pendant la première utilisation du canal, l'antenne 341 transmet une première trame, soit en reprenant les notations de (9) :

$$s^1(t) = \sum_{n=0}^{N_s-1} \sum_{m=1}^{M} \left( \sigma_{1,m} + \sigma_{2,m} \right) w(t - nT_s - c(n)T_c - m\varepsilon)$$
$$= \sum_{n=0}^{N_s-1} w(t - nT_s - c(n)T_c - \mu_1\varepsilon) + w(t - nT_s - c(n)T_c - \mu_2\varepsilon)$$

$$(18)$$

Simultanément, l'antenne 342 transmet une première trame :

$$s^2(t) = \sum_{n=0}^{N_s-1} \sum_{m=1}^{M} \left( \sigma_{3,m} + \sigma_{4,m} \right) w(t - nT_s - c(n)T_c - m\varepsilon)$$
$$= \sum_{n=0}^{N_s-1} w(t - nT_s - c(n)T_c - \mu_3\varepsilon) + w(t - nT_s - c(n)T_c - \mu_4\varepsilon)$$

$$(19)$$

Pendant la seconde utilisation du canal, l'antenne 341 transmet une seconde trame :

$$s^2(t) = \sum_{n=0}^{N_s-1} \sum_{m=1}^{M} \left( \sigma_{3,\omega(m)} + \sigma_{4,\delta \circ \omega(m)} \right) w(t - nT_s - c(n)T_c - m\varepsilon)$$

$$= \sum_{n=0}^{N_s-1} w(t - nT_s - c(n)T_c - \omega(\mu_3)\varepsilon) + w(t - nT_s - c(n)T_c - \delta \circ \omega(\mu_4)\varepsilon)$$

(20)

où $\omega(.)$ est le décalage circulaire droit de $\{M'+1,...,M\}$ correspondant à $\Omega$ et $\delta(.)$ est le décalage circulaire droit sur $\{1,2,...,M\}$ correspondant à $\Delta$ et o est l'opération de composition.
et l'antenne 342 transmet simultanément une seconde trame :

$$s^2(t) = \sum_{n=0}^{N_s-1} \sum_{m=1}^{M} \left( \sigma_{1,m} + \sigma_{2,\omega(m)} \right) w(t - nT_s - c(n)T_c - m\varepsilon)$$

$$= \sum_{n=0}^{N_s-1} w(t - nT_s - c(n)T_c - \mu_1\varepsilon) + w(t - nT_s - c(n)T_c - \omega(\mu_2)\varepsilon)$$

(21)

Selon un second mode de réalisation, le système MIMO comprend $P = 3$ antennes UWB et le nombre $M$ de positions de modulation est un multiple de 3. L'alphabet $A$ est partitionné en trois plages consécutives disjointes, ou sous-alphabets, soit $A_1 = \left\{ 1,..,\dfrac{M}{3} \right\}$, $A_2 = \left\{ \dfrac{M}{3}+1, \dfrac{2M}{3} \right\}$ et $A_3 = \left\{ \dfrac{2M}{3}+1, M \right\}$. Nous considérerons des blocs de symboles d'information $S=(\sigma_1,\sigma_2,\sigma_3,\sigma_4,\sigma_5,\sigma_6,\sigma_7,\sigma_8,\sigma_9)$ où $\sigma_1,\sigma_2,\sigma_3,\sigma_4,\sigma_5,\sigma_6,\sigma_7,\sigma_8,\sigma_9$ sont des symboles de $A$ tels que $\sigma_1,\sigma_4,\sigma_7 \in A_1$ , $\sigma_2,\sigma_5,\sigma_8 \in A_2$ et $\sigma_3,\sigma_6,\sigma_9 \in A_3$. L'alphabet $\tilde{A}$ composé des nonuplets $\sigma_1,\sigma_2,\sigma_3,\sigma_4,\sigma_5,\sigma_6,\sigma_7,\sigma_8,\sigma_9$ vérifiant la condition précédente, c'est à dire :

$$\tilde{A} = \left\{ (\sigma_1,\sigma_2,\sigma_3,\sigma_4,\sigma_5,\sigma_6,\sigma_7,\sigma_8,\sigma_9) \,\middle|\, \sigma_1,\sigma_4,\sigma_7 \in A_1; \sigma_2,\sigma_5,\sigma_8 \in A_2; \sigma_3,\sigma_6,\sigma_9 \in A_3 \right\}$$

(22)

$$Card\left(\tilde{A}\right) = \left(\dfrac{M}{3}\right)^9, \text{ puisque } Card\left(A_1\right) = Card\left(A_2\right) = Card\left(A_2\right) = \dfrac{M}{3} \ .$$

Par exemple pour un alphabet 6-PPM, l'alphabet $\tilde{A}$ sera composé des nonuplets $\sigma_1,\sigma_2,\sigma_3,\sigma_4,\sigma_5,\sigma_6,\sigma_6,\sigma_7,\sigma_8,\sigma_9$, tels que :

$$\sigma_1,\sigma_4,\sigma_7 \in \left\{ \begin{pmatrix} 1 \\ 0 \\ 0 \\ 0 \\ 0 \\ 0 \end{pmatrix}, \begin{pmatrix} 0 \\ 1 \\ 0 \\ 0 \\ 0 \\ 0 \end{pmatrix} \right\} \quad ; \quad \sigma_2,\sigma_5,\sigma_8 \in \left\{ \begin{pmatrix} 0 \\ 0 \\ 1 \\ 0 \\ 0 \\ 0 \end{pmatrix}, \begin{pmatrix} 0 \\ 0 \\ 0 \\ 1 \\ 0 \\ 0 \end{pmatrix} \right\} \quad ; \quad \sigma_3,\sigma_6,\sigma_9 \in \left\{ \begin{pmatrix} 0 \\ 0 \\ 0 \\ 0 \\ 1 \\ 0 \end{pmatrix}, \begin{pmatrix} 0 \\ 0 \\ 0 \\ 0 \\ 0 \\ 1 \end{pmatrix} \right\}$$

$$(23)$$

Dans le cas général d'un alphabet $M$-PPM, avec $M$ multiple de 3, le code spatio-temporel utilisé par le système MIMO-UWB à trois antennes est défini par la matrice suivante, de dimension $3M{\times}3$ :

$$C = \begin{pmatrix} \sigma_1 + \sigma_2 + \sigma_3 & \sigma_4 + \sigma_5 + \sigma_6 & \sigma_7 + \sigma_8 + \sigma_9 \\ \Delta\left(\sigma_7 + \Omega^{(1)}\sigma_8 + \sigma_9\right) & \sigma_1 + \Omega^{(1)}\sigma_2 + \sigma_3 & \sigma_4 + \Omega^{(1)}\sigma_5 + \sigma_6 \\ \Delta\left(\sigma_4 + \sigma_5 + \Omega^{(2)}\sigma_6\right) & \Delta\left(\sigma_7 + \sigma_8 + \Omega^{(2)}\sigma_9\right) & \sigma_1 + \sigma_2 + \Omega^{(2)}\sigma_3 \end{pmatrix}$$

$$(24)$$

où $\sigma_1,\sigma_2,\sigma_3,\sigma_4,\sigma_5,\sigma_6,\sigma_7,\sigma_8,\sigma_9$ sont les symboles d'information à transmettre, représentés sous forme de vecteurs colonne de dimension $M$ ;
$\Omega^{(1)}$ est une matrice de taille $M{\times}M$ définie par :

$$\Omega^{(1)} = \begin{pmatrix} \mathbf{I_{M'}} & \mathbf{0_{M'}} & \mathbf{0_{M'}} \\ \mathbf{0_{M'}} & \mathbf{\Omega'} & \mathbf{0_{M'}} \\ \mathbf{0_{M'}} & \mathbf{0_{M'}} & \mathbf{I_{M'}} \end{pmatrix} \qquad (25)$$

avec $M' = \dfrac{M}{3}$ ,  où $\mathbf{I_{M'}}$ et $\mathbf{0_{M'}}$ sont respectivement la matrice identité et la matrice nulle de dimension $M'{\times}M'$ et $\Omega'$

est une matrice de permutation de taille $M'{\times}M'$. On notera que la matrice $\Omega^{(1)}$ ne permute que les positions de modulation de l'alphabet $A_2$ ;
$\Omega^{(2)}$ est une matrice de taille $M{\times}M$ définie par :

$$\Omega^{(2)} = \begin{pmatrix} \mathbf{I_{M'}} & \mathbf{0_{M'}} & \mathbf{0_{M'}} \\ \mathbf{0_{M'}} & \mathbf{I_{M'}} & \mathbf{0_{M'}} \\ \mathbf{0_{M'}} & \mathbf{0_{M'}} & \mathbf{\Omega'} \end{pmatrix} \qquad (26)$$

avec les mêmes conventions de notation que ci-dessus. On notera que la matrice $\Omega^{(2)}$ ne permute que les positions de modulation de l'alphabet $A_3$.

$\Delta$ est une matrice de permutation de taille $M \times M$ opérant sur les positions de modulation de l'alphabet $A$.

Les matrices $\Delta$ et $\Omega'$ peuvent être des matrices de permutation circulaire voire de simple décalage circulaire, comme précédemment. Le code spatio-temporel est bien entendu aussi défini à une permutation près des lignes et des colonnes de **C**.

Le débit binaire du code spatio-temporel défini par l'expression (24) est de :

$$R = \frac{\log_2\left(\left(\frac{M}{3}\right)^9\right)}{3} = 3\log_2\left(\frac{M}{3}\right) \qquad (27)$$

Le code spatio-temporel est aussi à diversité maximale et possède les propriétés avantageuses déjà mentionnées pour le premier mode de réalisation.

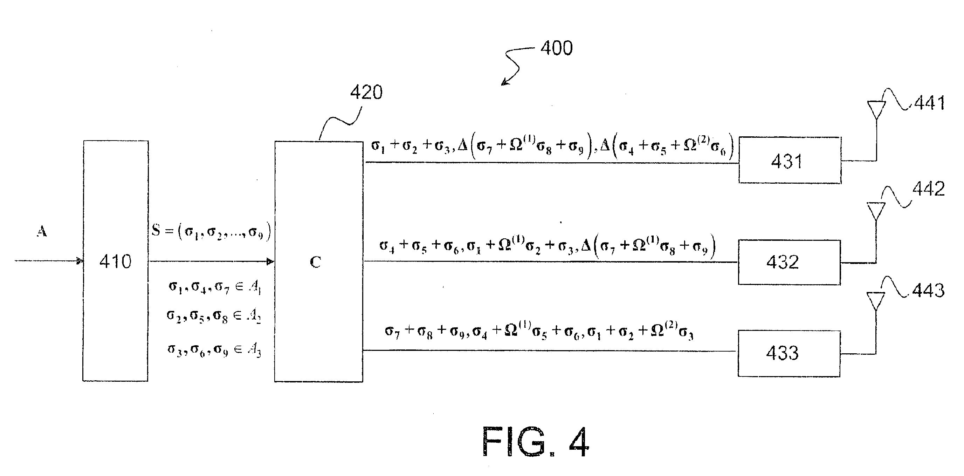

La Fig. 4 représente un exemple de système de transmission UWB à trois éléments radiatifs selon un second mode de réalisation de l'invention. Les éléments radiatifs peuvent être des antennes UWB, des diodes laser ou des LEDs infrarouge. Le système 400 comprend un codeur spatio-temporel 420, trois modulateurs UWB désignés par 431, 432 et 433 et trois antennes UWB, 441, 442 et 443. Le codeur 420 reçoit des blocs de symboles d'information $\mathbf{S}=(\sigma_1, \sigma_2, \sigma_3, \sigma_4, \sigma_5, \sigma_6, \sigma_7, \sigma_8, \sigma_9)$ appartenant à l'alphabet $\tilde{A}$ et calcule les éléments de la matrice **C** obéissant à l'expression (24) ou à une variante obtenue par permutation de ses lignes et/ou ses colonnes comme indiqué précédemment. Dans le cas d'un code spatio-temporel défini par (24), le codeur 420 transmet respectivement aux modulateurs 431, 432 et 433 les vecteurs $\sigma_1+\sigma_2+\sigma_3, \sigma_4+\sigma_5+\sigma_6, \sigma_7+\sigma_8+\sigma_9$ pendant la première utilisation du canal, les vecteurs $\Delta(\sigma_7+\Omega^{(1)}\sigma_8+\sigma_9)$, $\sigma_1+\Omega^{(1)}\sigma_2+\sigma_3$ et $\sigma_4+\Omega^{(1)}\sigma_5+\sigma_6$ pendant la seconde utilisation du canal, et enfin les vecteurs $\Delta(\sigma_4+\sigma_5+\Omega^{(2)}\sigma_6)$, $\Delta(\sigma_7+\sigma_8+\Omega^{(2)}\sigma_9)$ et $\sigma_1+\sigma_2+\Omega^{(2)}\sigma_3$ pendant la troisième utilisation du canal.

Le modulateur UWB 431 génère, à partir des vecteurs colonnes $\sigma_1+\sigma_2+\sigma_3$, $\Delta(\sigma_7+\Omega^{(1)}\sigma_8+\sigma_9)$ et $\Delta(\sigma_7+\Omega^{(1)}\sigma_8+\sigma_9)$ les signaux UWB impulsionnels modulés correspondants et les transmet à l'antenne 441 pendant les première, seconde et troisième utilisations du canal, respectivement. De même, le modulateur UWB 432 génère, à partir des vecteurs colonne $\sigma_4+\sigma_5+\sigma$, $\sigma_1+\Omega^{(1)}\sigma_2+\sigma_3$ et $(\sigma_7+\Omega^{(1)}\sigma_8+\sigma_9)$ les signaux UWB impulsionnels modulés correspondants et les transmet à l'antenne 442 pendant les première, seconde et troisième utilisations du canal, respectivement. Enfin, le modulateur UWB 433 génère, à partir des vecteurs colonne $\sigma_7+\sigma_8+\sigma_9$, $\sigma_4+\Omega^{(1)}\sigma_5+\sigma_6$ et $\sigma_1+\sigma+\Omega^{(2)}\sigma_3$ les signaux UWB impulsionnels modulés correspondants et les transmet à l'antenne 443 pendant les première, seconde et troisième utilisations du canal, respectivement.

Le système 400 peut comprendre, comme pour le premier mode de réalisation, un transcodeur 410 adapté à recevoir des symboles d'information, par exemple des symboles binaires $\mathbf{A} = (a_1, a_2, ... a_b)$ et à les coder sous forme de blocs $\mathbf{S} \in \tilde{A}$.

De manière plus générale, les premier et second modes de réalisation peuvent être généralisés au cas d'un système MIMO-UWB à $P$ éléments radiatifs, pour un nombre de positions de modulation $M$ multiple de $P$. On pose

$M' = \dfrac{M}{P}$ . L'alphabet $A$ peut être partitionné en $P$ plages consécutives disjointes, ou sous-alphabets, soit $A_1 = \{1.., M'\}$, $A_2 = \{M'+1, ..., 2M'\}$, ..., $A_P = \{M-M'+1, ..., M\}$.

On considère des blocs de symboles d'information $S=(\sigma_1, \sigma_2, ..., \sigma_{P2})$ où $\sigma_1, \sigma_2, ..., \sigma_{P2}$ sont des symboles de $A$ tels que $\sigma_{qP+1} \in A_1$, $\sigma_{qP+2} \in A_2, ...,$ $\sigma_{qP+P} \in A_P$ avec $q = 0, ..., P-1$. L'alphabet $\tilde{A}$ composé des $P^2$-uplets vérifiant la condition précédente, c'est-à-dire :

$$\tilde{A} = \left\{ \left(\sigma_1, \sigma_2, .., \sigma_{P^2}\right) \middle| \sigma_{qP+1} \in A_1; \sigma_{qP+2}, \in A_2; ..., \sigma_{(q+1)P} \in A_P; q = 0, .., P-1 \right\}$$

$$(28)$$

est une extension de l'alphabet $A$ , de cardinal $\text{Card}(\tilde{A})=(M')^{P2}$, puisque $\text{Card}(A_p) = M'$.

Le code spatio-temporel utilisé par le système MIMO-UWB à $P$ antennes est défini par la matrice **C** de dimension $PM \times P$ donnée en annexe.

Les matrices $\Omega^{(p)}$, $p=1,...,P$-1, sont des matrice de taille $M \times M$ définies par :

$$\Omega^{(1)} = \begin{pmatrix} \mathbf{I_{M'}} & \mathbf{0_{M'}} & \cdots & \mathbf{0_{M'}} \\ \mathbf{0_{M'}} & \mathbf{\Omega'} & \cdots & \mathbf{0_{M'}} \\ \vdots & \vdots & \ddots & \vdots \\ \mathbf{0_{M'}} & \mathbf{0_{M'}} & \cdots & \mathbf{I_{M'}} \end{pmatrix} \qquad (29)$$

et ainsi de suite, la matrice $\Omega'$ occupant des positions successives sur la diagonale jusqu'à :

$$\Omega^{(P-1)} = \begin{pmatrix} \mathbf{I_{M'}} & \mathbf{0_{M'}} & \cdots & \mathbf{0_{M'}} \\ \mathbf{0_{M'}} & \mathbf{I_{M'}} & \cdots & \mathbf{0_{M'}} \\ \vdots & \vdots & \ddots & \vdots \\ \mathbf{0_{M'}} & \mathbf{0_{M'}} & \cdots & \mathbf{\Omega'} \end{pmatrix} \qquad (30)$$

où $I_{M'}$ et $0_{M'}$ sont respectivement la matrice identité et la matrice nulle de dimension $M' \times M'$ et $\Omega'$ est une matrice de permutation de taille $M' \times M'$. On notera que la matrice $\Omega^{(p)}$, $p=1,...,P$-1, ne permute que les positions de modulation de l'alphabet $A_{p+1}$.

$\Delta$ est une matrice de permutation de taille $M \times M$ opérant sur les positions de modulation de l'alphabet $A$.

Le code spatio-temporel est là encore défini à une permutation près des lignes et des colonnes de **C**.

De manière générale, les conclusions exposées pour le premier mode de réalisation ($P$=2) et le second mode de réalisation ($P$=3) sont encore valables pour $P$>3. En particulier le débit binaire du système est de :

$$R = \frac{\log_2\left(\left(M'\right)^{P^2}\right)}{P} = P\log_2\left(\frac{M}{P}\right) \qquad (31)$$

qui est supérieur au débit d'un système mono-antenne classique $\log_2(M)$. Le code spatio-temporel possède également les propriétés de diversité maximale, de caractère non-signé et d'équilibre de puissance entre antennes.

Les signaux UWB transmis par le système illustré en Figs. 3, 4 ou plus généralement par un système MIMO-UWB à $P$ antennes utilisant le codeur spatio-temporel précédemment décrit peuvent être traités par un récepteur multi-antenne de manière classique. Le récepteur pourra par exemple comprendre un étage de corrélation de type Rake suivi d'un étage de décision, utilisant par exemple un décodeur par sphère connu de l'homme du métier.

**Annexe :**

$$C = \begin{pmatrix} \sigma_1 + \sigma_2 + ... + \sigma_P & \sigma_{P+1} + \sigma_{P+2} + ... + \sigma_{2P} & \cdots & \sigma_{P(P-1)+1} + \sigma_{P(P-1)+2} + ... + \sigma_{P^2} \\ \Delta\left(\sigma_{P(P-1)+1} + \Omega^{(1)}\sigma_{P(P-1)+2} + ... + \sigma_{P^2}\right) & \sigma_1 + \Omega^{(1)}\sigma_2 + ... + \sigma_P & \cdots & \sigma_{P(P-2)+1} + \sigma_{P(P-2)+2} + ... + \sigma_{P(P-1)} \\ \vdots & \vdots & \ddots & \vdots \\ \Delta\left(\sigma_{P(P-2)+1} + \sigma_{P(P-2)+2} + ... + \Omega^{(P)}\sigma_{P(P-1)}\right) & \Delta\left(\sigma_{P(P-1)+1} + \sigma_{P(P-1)+2} + ... + \Omega^{(P)}\sigma_{P^2}\right) & \cdots & \sigma_1 + \sigma_2 + ... + \Omega^{(P)}\sigma_P \end{pmatrix}$$

**Revendications**

1. Procédé de codage spatio-temporel pour système de transmission UWB comprenant deux éléments radiatifs, ledit procédé codant un bloc de symboles d'information **S=($\sigma_1,\sigma_2,\sigma_3,\sigma_4$)** appartenant à un alphabet de modulation PPM présentant un nombre *M* pair de positions de modulation, ledit alphabet étant partitionné en un premier et un second sous-alphabets correspondant à des plages successives de positions de modulation, les symboles $\sigma_1,\sigma_3$ appartenant au premier sous-alphabet et les symboles $\sigma_2,\sigma_4$ appartenant au second sous-alphabet, le procédé codant ledit bloc de symboles en une séquence de vecteurs, chaque vecteur étant associé à une utilisation du canal de transmission et un élément radiatif donné, les composantes d'un vecteur étant destinées à moduler en position un signal UWB impulsionnel, chaque composante correspondant à une position de modulation PPM, **caractérisé en ce que** lesdits vecteurs sont obtenus à partir des éléments de la matrice :

$$C = \begin{pmatrix} \sigma_1 + \sigma_2 & \sigma_3 + \sigma_4 \\ \Delta\left(\sigma_3 + \Omega\sigma_4\right) & \sigma_1 + \Omega\sigma_2 \end{pmatrix}$$

une ligne de la matrice correspondant à une utilisation du canal de transmission et une colonne de la matrice correspondant à un élément radiatif, la matrice **C** étant définie à une permutation près de ses lignes et/ou ses colonnes, $\Delta$ étant une permutation des positions PPM dudit alphabet et $\Omega$ étant une permutation des positions de modulation PPM dudit second sous-alphabet.

2. Procédé de codage spatio-temporel selon la revendication 1, **caractérisé en ce que** $\Omega$ est une permutation circulaire des positions de modulation PPM dudit second sous-alphabet.

3. Procédé de codage spatio-temporel selon la revendication 2, **caractérisé en ce que** $\Omega$ est un décalage circulaire des positions de modulation PPM dudit second alphabet.

4. Procédé de codage spatio-temporel pour système de transmission UWB comprenant trois éléments radiatifs, ledit procédé codant un bloc de symboles d'information **S=($\sigma_1,\sigma_2,\sigma_3,\sigma_4,\sigma_5,\sigma_6,\sigma_7,\sigma_8,\sigma_9$)** appartenant à un alphabet de modulation PPM présentant un nombre *M* de positions de modulation multiple de 3, ledit alphabet étant partitionné en un premier, un second et un troisième sous-alphabets correspondant à des plages successives de positions de modulation, les symboles $\sigma_1,\sigma_4,\sigma_7$ appartenant au premier sous-alphabet, les symboles $\sigma_2,\sigma_5,\sigma_8$ appartenant au second sous-alphabet et les symboles $\sigma_3,\sigma_6,\sigma_9$ au troisième sous-alphabet, le procédé codant ledit bloc de symboles en une séquence de vecteurs, chaque vecteur étant associé à une utilisation du canal de transmission et un élément radiatif donnés, les composantes d'un vecteur étant destinées à moduler en position un signal UWB impulsionnel, chaque composante correspondant à une position de modulation PPM, **caractérisé en ce que** lesdits vecteurs sont obtenus à partir des éléments de la matrice :

$$C = \begin{pmatrix} \sigma_1 + \sigma_2 + \sigma_3 & \sigma_4 + \sigma_5 + \sigma_6 & \sigma_7 + \sigma_8 + \sigma_9 \\ \Delta\left(\sigma_7 + \Omega^{(1)}\sigma_8 + \sigma_9\right) & \sigma_1 + \Omega^{(1)}\sigma_2 + \sigma_3 & \sigma_4 + \Omega^{(1)}\sigma_5 + \sigma_6 \\ \Delta\left(\sigma_4 + \sigma_5 + \Omega^{(2)}\sigma_6\right) & \Delta\left(\sigma_7 + \sigma_8 + \Omega^{(2)}\sigma_9\right) & \sigma_1 + \sigma_2 + \Omega^{(2)}\sigma_3 \end{pmatrix}$$

une ligne de la matrice correspondant à une utilisation du canal de transmission et une colonne de la matrice correspondant à un élément radiatif, la matrice **C** étant définie à une permutation près de ses lignes et/ou ses colonnes, $\Delta$ étant une permutation des positions PPM dudit alphabet, $\Omega^{(1)}$ étant une permutation des positions de modulation PPM dudit second sous-alphabet et $\Omega^{(2)}$ étant une permutation des positions de modulation PPM dudit troisième sous-alphabet.

5. Procédé de codage spatio-temporel selon la revendication 4, **caractérisé en ce que** $Q^{(1)}$ et/ou $\Omega^{(2)}$ est une/sont des permutation (s) circulaire (s) des positions de modulation PPM, respectivement desdits second et troisième sous-alphabets.

6. Procédé de codage spatio-temporel selon la revendication 5, **caractérisé en ce que** $\Omega^{(1)}$ et/ou $\Omega^{(2)}$ est une/sont des décalage (s) circulaire (s) des positions de modulation PPM, respectivement desdits second et troisième sous-alphabets.

7. Procédé de codage spatio-temporel pour système de transmission UWB comprenant une pluralité **P** d'éléments radiatifs, ledit procédé codant un bloc de symboles d'information **S= ($\sigma_1,\sigma_2,...,\sigma_{P2}$)** appartenant à un alphabet de modulation PPM présentant un nombre **M** de positions de modulation multiple de **P**, ledit alphabet étant partitionné en **P** sous-alphabets correspondant à des plages successives de positions de modulation, les symboles $\sigma_{qP+1}$, $q$=0,...,$P$-1 appartenant au premier sous-alphabet, les symboles $\sigma_{qP+2}$, $q$=0,...,$P$-1 appartenant au second sous-alphabet, et ainsi de suite, les symboles $\sigma_{qP+P}$, $q$=0,...,$P$-1 au $P$ ième sous-alphabet, le procédé codant ledit bloc de symboles en une séquence de vecteurs, chaque vecteur étant associé à une utilisation du canal de transmission et un élément radiatif donnés, les composantes d'un vecteur étant destinées à moduler en position un signal UWB impulsionnel, chaque composante correspondant à une position de modulation PPM, **caractérisé en ce que** lesdits vecteurs sont obtenus à partir des éléments de la matrice donnée en annexe, une ligne de la matrice correspondant à une utilisation du canal de transmission et une colonne de la matrice correspondant à un élément radiatif, la matrice **C** étant définie à une permutation près de ses lignes et/ou ses colonnes, $\Delta$ étant une permutation des positions PPM dudit alphabet, les matrices $\Omega^{(p)}$, $p$ = 1,..., $P$-1 étant une permutation des positions de modulation PPM du ($p$+1)ième sous-alphabet.

8. Procédé de codage spatio-temporel selon la revendication 7, **caractérisé en ce qu'**au moins une matrice $\Omega^{(p)}$, p=1,...,$P$-1 est une permutation circulaire des positions de modulation PPM du ($p$+1)ième sous-alphabet.

9. Procédé de codage spatio-temporel selon la revendication 8, **caractérisé en ce qu'**au moins une matrice $\Omega^{(p)}$, $p$ =1,...,$P$-1 est un décalage circulaire des positions de modulation PPM du ($p$+1)ième sous-alphabet.

10. Procédé de codage selon l'une des revendications précédentes, **caractérisé en ce que** la matrice $\Delta$ est une permutation circulaire dudit alphabet.

11. Procédé de codage spatio-temporel selon la revendication 10, **caractérisé en ce que** la matrice $\Delta$ est un décalage circulaire dudit alphabet.

12. Procédé de codage spatio-temporel selon l'une des revendications précédentes, **caractérisé en ce que** les éléments radiatifs sont des antennes UWB.

13. Procédé de transmission selon l'une des revendications 1 à 11, **caractérisé en ce que** les éléments radiatifs sont des diodes laser ou des diodes électroluminescentes.

14. Procédé selon l'une des revendications précédentes, **caractérisé en ce que** ledit signal impulsionnel est un signal TH-UWB.

**Claims**

1. Space-time coding method for a UWB transmission system comprising two radiative elements, said method coding a block of information symbols $\mathbf{S}=(\sigma_1,\sigma_2,\sigma_3,\sigma_4)$ belonging to a PPM modulation alphabet with an even number $M$ of modulation positions, said alphabet being partitioned into first and second sub-alphabets corresponding to successive ranges of modulation positions, the symbols $\sigma_1,\sigma_3$ belonging to the first sub-alphabet and the symbols $\sigma_2$, $\sigma_4$ belonging to the second sub-alphabet, the method coding said symbol block into a sequence of vectors, each vector being associated with a given use of the transmission channel and a given radiative element, the components of a vector being intended to modulate the position of a pulse UWB signal, each component corresponding to a PPM modulation position, **characterised in that** said vectors are obtained from elements of the matrix:

$$\mathbf{C}=\begin{pmatrix} \sigma_1+\sigma_2 & \sigma_3+\sigma_4 \\ \Delta\left(\sigma_3+\Omega\sigma_4\right) & \sigma_1+\Omega\sigma_2 \end{pmatrix}$$

one line of the matrix corresponding to one use of the transmission channel and one column of the matrix corresponding to one radiative element, the matrix **C** being defined within one permutation of its rows and/or its columns, $\Delta$ being a permutation of the PPM positions of said alphabet and $\Omega$ being a permutation of the PPM modulation positions of said second sub-alphabet.

2. Space-time coding method according to claim 1, **characterised in that** $\Omega$ is a circular permutation of PPM modulation positions of said second sub-alphabet.

3. Space-time coding method according to claim 2, **characterised in that** $\Omega$ is a circular shift of PPM modulation positions of said second alphabet.

4. Space-time coding method for a UWB transmission system comprising three radiative elements, said method coding a block of information symbols $\mathbf{S}=(\sigma_1,\sigma_2,\sigma_3,\sigma_4,\sigma_5,\sigma_6,\sigma_7,\sigma_8,\sigma_9)$ belonging to a PPM modulation alphabet with a number $M$ of modulation positions that is a multiple of 3, said alphabet being partitioned into first, second and third sub-alphabets corresponding to successive ranges of modulation positions, the $\sigma_1,\sigma_4,\sigma_7$ symbols belonging to the first sub-alphabet, the $\sigma_2,\sigma_5,\sigma_8$ symbols belonging to the second sub-alphabet and the $\sigma_3,\sigma_6,\sigma_9$ symbols belonging to the third sub-alphabet, the method coding said block of symbols into a sequence of vectors, each vector being associated with a given use of the transmission channel and a given radiative element, components of a vector being designed to modulate the position of a pulse UWB signal, each component corresponding to a PPM modulation position, **characterised in that** said vectors are obtained from elements of the matrix:

$$\mathbf{C}=\begin{pmatrix} \sigma_1+\sigma_2+\sigma_3 & \sigma_4+\sigma_5+\sigma_6 & \sigma_7+\sigma_8+\sigma_9 \\ \Delta\left(\sigma_7+\Omega^{(1)}\sigma_8+\sigma_9\right) & \sigma_1+\Omega^{(1)}\sigma_2+\sigma_3 & \sigma_4+\Omega^{(1)}\sigma_5+\sigma_6 \\ \Delta\left(\sigma_4+\sigma_5+\Omega^{(2)}\sigma_6\right) & \Delta\left(\sigma_7+\sigma_8+\Omega^{(2)}\sigma_9\right) & \sigma_1+\sigma_2+\Omega^{(2)}\sigma_3 \end{pmatrix}$$

one row of the matrix corresponding to one use of the transmission channel and one column of the matrix corresponding to one radiative element, the matrix **C** being defined within one permutation of its rows and/or its columns, $\Delta$ being a permutation of the PPM positions of said alphabet, $\Omega^{(1)}$ being a permutation of the PPM modulation positions of said second sub-alphabet and $\Omega^{(2)}$ being a permutation of the PPM modulation positions of said third sub-alphabet.

5. Space-time coding method according to claim 4, **characterised in that** $\Omega^{(1)}$ and/or $\Omega^{(2)}$ is/are one or more circular permutations of the PPM modulation positions of the second and third sub-alphabets respectively.

6. Space-time coding method according to claim 5, **characterised in that** $\Omega^{(1)}$ and/or $\Omega^{(2)}$ is/are one or more circular shifts of the PPM modulation positions of said second and third sub-alphabets respectively.

7. Space-time coding method for a UWB transmission system comprising a plurality $P$ of radiative elements, said method coding a block of information symbols $\mathbf{S}=(\sigma_1,\sigma_2,...\sigma_{P2})$ belonging to a PPM modulation alphabet with a number $M$ of modulation positions that is a multiple of $P$, said alphabet being partitioned into $P$ sub-alphabets corresponding to successive ranges of modulation positions, the $\sigma_{qP+1}$, $q=0,...,P-1$ symbols belonging to the first sub-alphabet, the $\sigma_{qP+2}$, $q=0,...,P-1$ symbols belonging to the second sub-alphabet, and so on, the $\sigma_{qP+P}$, $q=0,...,$ $P-1$ symbols belonging to the $P$th sub-alphabet, the method coding said block of symbols into a sequence of vectors, each vector being associated with a given use of the transmission channel and a given radiative element, the components of a vector being intended to modulate the position of a pulse UWB signal, each component corresponding to a PPM modulation position, **characterised in that** said vectors are obtained from elements of the matrix given in the appendix, one row of the matrix corresponding to one use of the transmission channel and one column of the matrix corresponding to one radiative element, the matrix **C** being defined within one permutation of its rows and/or its columns, $\Delta$ being a permutation of the PPM positions of said alphabet, the matrices $\Omega^{(p)}$, $p=1,...,$ $P-1$ being a permutation of the PPM modulation positions of the $(p+1)$th sub-alphabet.

8. Space-time coding method according to claim 7, **characterised in that** at least one matrix $\Omega^{(p)}$, $p = 1,...,P-1$ is a circular permutation of the PPM modulation positions of the $(p+1)$th sub-alphabet.

9. Space-time coding method according to claim 8, **characterised in that** at least one matrix $\Omega^{(p)}$, $p=1,...,P-1$ is a circular shift of the PPM modulation positions of the $(p+1)$th sub-alphabet.

10. Coding method according to one of the previous claims, **characterised in that** the matrix $\Delta$ is a circular permutation of said alphabet.

11. Space-time coding method according to claim 10, **characterised in that** the matrix $\Delta$ is a circular shift of said alphabet.

12. Space-time method according to one of the previous claims, **characterised in that** the radiative elements are UWB antennas.

13. Transmission method according to one of claims 1 to 11, **characterised in that** the radiative elements are laser diodes or light emitting diodes.

14. Method according to one of the previous claims, **characterised in that** said pulse signal may be a TH-UWB signal.

**Patentansprüche**

1. Raum-Zeit-Codierverfahren für ein UWB-Übertragungssystem, das zwei Strahlungselemente enthält, wobei das Verfahren einen Block von Informationssymbolen $\mathbf{S}=(\sigma_1,\sigma_2,\sigma_3,\sigma_4)$ codiert, der zu einem Alphabet der Modulation PPM mit einer geraden Zahl M von Modulationspositionen gehört, wobei das Alphabet in ein erstes und ein zweites Unteralphabet partitioniert ist, die aufeinanderfolgenden Modulationspositionsbereichen entsprechen, wobei die Symbole $\sigma_1,\sigma_3$ zum ersten Unteralphabet gehören, und die Symbole $\sigma_2,\sigma_4$ zum zweiten Unteralphabet gehören, wobei das Verfahren den Block von Symbolen in eine Sequenz von Vektoren codiert, wobei jeder Vektor einer Benutzung des gegebenen Übertragungskanals und einem gegebenen Strahlungselement zugeordnet ist, wobei die Komponenten eines Vektors dazu ausgelegt sind, ein UWB-Pulssignal in der Position zu modulieren, wobei jede Komponente einer PPM-Modulationsposition entspricht, **dadurch gekennzeichnet, dass** die Vektoren erhalten sind ausgehend von den Elementen der Matrix:

$$\mathbf{C} = \begin{pmatrix} \sigma_1 + \sigma_2 & \sigma_3 + \sigma_4 \\ \Delta(\sigma_3 + \Omega\sigma_4) & \sigma_1 + \Omega\sigma_2 \end{pmatrix}$$

wobei eine Zeile der Matrix einer Benutzung des Übertragungskanals entspricht und eine Spalte der Matrix einem Strahlungselement entspricht, wobei die Matrix **C** bis auf eine Permutation ihrer Zeilen und/oder ihrer Spalten definiert ist, wobei $\Delta$ eine Permutation der PPM-Positionen des Alphabets ist, und $\Omega$ eine Permutation der PPM-Modulationspositionen des zweiten Unteralphabets ist.

2. Raum-Zeit-Codierverfahren nach Anspruch 1, **dadurch gekennzeichnet, dass** $\Omega$ einen zyklische Permutation der PPM-Modulationspositionen des zweiten Unteralphabets ist.

3. Raum-Zeit-Codierverfahren nach Anspruch 2, **dadurch gekennzeichnet, dass** $\Omega$ eine zyklische Vertauschung der PPM-Modulationspositionen des zweiten Alphabets ist.

4. Raum-Zeit-Codierverfahren für ein UWB-Übertragungssystem, das drei Strahlungselemente enthält, wobei das Verfahren einen Block von Informationssymbolen $\mathbf{S}=(\sigma_1,\sigma_2,\sigma_3,\sigma_4,\sigma_5,\sigma_6,\sigma_7,\sigma_8,\sigma_9,)$ Codiert, der zu einem Alphabet der Modulation PPM mit einer Zahl $M$ von Modulationspositionen gehört, die ein Vielfaches von 3 ist, wobei das Alphabet in ein erstes, ein zweites und ein drittes Unteralphabet partitioniert ist, die aufeinanderfolgenden Modulationspositionsbereichen entsprechen, wobei die Symbole $\sigma_1,\sigma_4,\sigma_7$ zum ersten Unteralphabet gehören, die Symbole $\sigma_2,\sigma_5,\sigma_8$ zum zweiten Unteralphabet gehören und die Symbole $\sigma_3,\sigma_6,\sigma_9$ zum dritten Unteralphabet gehören, wobei das Verfahren den Block von Symbolen in eine Sequenz von Vektoren codiert, wobei jeder Vektor einer Benutzung des gegebenen Übertragungskanals und einem gegebenen Strahlungselement zugeordnet ist, wobei die Komponenten eines Vektors dazu ausgelegt sind, ein UWB-Pulssignal in der Position zu modulieren, wobei jede Komponente einer PPM-Modulationsposition entspricht, **dadurch gekennzeichnet, dass** die Vektoren erhalten sind ausgehend von den Elementen der Matrix:

$$\mathbf{C} = \begin{pmatrix} \sigma_1 + \sigma_2 + \sigma_3 & \sigma_4 + \sigma_5 + \sigma_6 & \sigma_7 + \sigma_8 + \sigma_9 \\ \Delta\left(\sigma_7 + \Omega^{(1)}\sigma_8 + \sigma_9\right) & \sigma_1 + \Omega^{(1)}\sigma_2 + \sigma_3 & \sigma_4 + \Omega^{(1)}\sigma_5 + \sigma_6 \\ \Delta\left(\sigma_4 + \sigma_5 + \Omega^{(2)}\sigma_6\right) & \Delta\left(\sigma_7 + \sigma_8 + \Omega^{(2)}\sigma_9\right) & \sigma_1 + \sigma_2 + \Omega^{(2)}\sigma_3 \end{pmatrix}$$

wobei eine Zeile der Matrix einer Benutzung des Übertragungskanals entspricht, und eine Spalte der Matrix einem Strahlungselement entspricht, wobei die Matrix **C** bis auf eine Permutation ihrer Zeilen und/oder ihrer Spalten definiert ist, wobei $\Delta$ eine Permutation der PPM-Positionen des Alphabets ist, $\Omega^{(1)}$ eine Permutation der PPM-Modulationspositionen des zweiten Unteralphabets ist, und $\Omega^{(2)}$ eine Permutation der PPM-Modulationspositionen des dritten Unteralphabets ist.

5. Raum-Zeit-Codierverfahren nach Anspruch 4, **dadurch gekennzeichnet, dass** $\Omega^{(1)}$ und/oder $\Omega^{(2)}$ (eine) zyklische Permutation(en) der PPM-Modulationspositionen des zweiten bzw. des dritten Unteralphabets ist/sind.

6. Raum-Zeit-Codierverfahren nach Anspruch 5, **dadurch gekennzeichnet, dass** $\Omega^{(1)}$ und/oder $\Omega^{(2)}$ (eine) zyklische Vertauschung(en) der PPM-Modulationspositionen des zweiten bzw. des dritten Unteralphabets ist/sind.

7. Raum-Zeit-Codierverfahren für ein UWB-Übertragungssystem, das eine Mehrzahl $P$ von Strahlungselementen enthält, wobei das Verfahren einen Block von Informationssymbolen $\mathbf{S}=(\sigma_1,\sigma_2,...,\sigma_{P2},)$ codiert, der zu einem Alphabet der Modulation PPM mit einer Zahl $M$ von Modulationspositionen gehört, die ein Vielfaches von $P$ ist, wobei das Alphabet in $P$ Unteralphabete partitioniert ist, die aufeinanderfolgenden Modulationspositionsbereichen entsprechen, wobei die Symbole $\sigma_{qP+1}$, $q = 0,...P-1$ zum ersten Unteralphabet gehören, die Symbole $\sigma_{qP+2}$, $q = 0,...,P-1$ zum zweiten Unteralphabet gehören, usw., die Symbole $\sigma_{qP+P}$, $q = 0,...,P-1$ zum $P$-ten Unteralphabet, wobei das Verfahren den Block von Symbolen in eine Sequenz von Vektoren codiert, wobei jeder Vektor einer Benutzung des gegebenen Übertragungskanals und einem gegebenen Strahlungselement zugeordnet ist, wobei die Komponenten eines Vektors dazu ausgelegt sind, ein UWB-Pulssignal in der Position zu modulieren, wobei jede Komponente einer PPM-Modulationsposition entspricht, **dadurch gekennzeichnet, dass** die Vektoren erhalten sind ausgehend von den Elementen der im Anhang (annexe) gegebenen Matrix, wobei eine Zeile der Matrix einer Benutzung des Übertragungskanals und eine Spalte der Matrix einem Strahlungselement entspricht, wobei die Matrix **C** bis auf eine Permutation ihrer Zeilen und/oder ihrer Spalten definiert ist, wobei $\Delta$ eine Permutation der PPM-Positionen des Alphabets ist, wobei die Matrizen $\Omega^{(p)}$, $p = 1,...,P-1$ eine Permutation der PPM-Modulationspositionen des $(p+1)$-ten Unteralphabets sind.

8. Raum-Zeit-Codierverfahren nach Anspruch 7, **dadurch gekennzeichnet, dass** wenigstens eine Matrix $\Omega^{(p)}$, $p$ = 1,...,P-1 eine zyklische Permutation der PPM-Modulationspositionen des ($p$+1)-ten Unteralphabets ist.

9. Raum-Zeit-Codierverfahren nach Anspruch 8, **dadurch gekennzeichnet, dass** wenigstens eine Matrix $\Omega^{(p)}$, $p$ = 1,...,P-1 eine zyklische Vertauschung der PPM-Modulationspositionen des ($p$+1)-ten Unteralphabets ist.

10. Codierverfahren nach einem der vorhergehenden Ansprüche, **dadurch gekennzeichnet, dass** die Matrix $\Delta$ eine zyklische Permutation des Alphabets ist.

11. Raum-Zeit-Codierverfahren nach Anspruch 10, **dadurch gekennzeichnet, dass** die Matrix $\Delta$ eine zyklische Vertauschung des Alphabets ist.

12. Raum-Zeit-Codierverfahren nach einem der vorhergehenden Ansprüche, **dadurch gekennzeichnet, dass** die Strahlungselemente UWB-Antennen sind.

13. Übertragungsverfahren nach einem der Ansprüche 1 bis 11, **dadurch gekennzeichnet, dass** die Strahlungselemente Laserdioden oder Elektrolumineszenzdioden sind.

14. Verfahren nach einem der vorhergehenden Ansprüche, **dadurch gekennzeichnet, dass** das Pulssignal ein TH-UWB-Signal ist.

EP 2 053 814 B1

$$\mathbf{A} = (a_1,...,a_b) \longrightarrow \boxed{\mathbf{C} = \begin{pmatrix} c_{1,1} & c_{1,2} & ... & c_{1,P} \\ c_{2,1} & c_{2,2} & ... & c_{2,P} \\ \vdots & \vdots & \ddots & \vdots \\ c_{T,1} & c_{T,2} & ... & c_{T,P} \end{pmatrix}}$$

FIG.1

$$c_k(n) = 7,1,4,7$$

TH-UWB

# FIG.2

EP 2 053 814 B1

$S = (\sigma_1, \sigma_2, \sigma_3, \sigma_4)$

$\sigma_1, \sigma_3 \in A_1$

$\sigma_2, \sigma_4 \in A_2$

$C = \begin{pmatrix} \sigma_1 + \sigma_2 & \sigma_3 + \sigma_4 \\ \Delta(\sigma_3 + \Omega\sigma_4) & \sigma_1 + \Omega\sigma_2 \end{pmatrix}$

$\sigma_1 + \sigma_2, \quad \Delta(\sigma_3 + \Omega\sigma_4)$

$\sigma_3 + \sigma_4, \quad \sigma_1 + \Omega\sigma_2$

FIG.3

EP 2 053 814 B1

FIG. 4

EP 2 053 814 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *IEEE Journal on selected areas in communications,* Octobre 1998, vol. 16, 1451-1458
- **C. Abou-Rjeily et al.** A space-time coded MIMO TH-UWB transceiver with binary pulse position modulation. *IEEE Communications Letters,* Juin 2007, vol. 11 (6), 522-524
- A rate-1 2×2 space-time code without any constellation extension for TH-UWB communications system with PPM. *Proceedings of the 2007 VTC Conference,* Avril 2007, 1683-1687